# EUROPEAN PATENT SPECIFICATION

(11) **EP 4 648 443 B1**
(45) Date of publication and mention of the grant of the patent: **11.03.2026**
(21) Application number: 24175197.3
(22) Date of filing: 10.05.2024
(51) Int. Cl.: H04W 4/02, H04W 64/00, H04L 69/30, H04L 67/2866, H04L 67/52, H04W 12/12, H04L 9/40, G01S 19/00

(54) **METHOD FOR USING A SERVICE ENABLER ARCHITECTURE LAYER FOR VERTICALS, SEAL, IN A VERTICAL APPLICATION LAYER, VAL, IMPLEMENTATION, FOR PROVIDING COMMUNICATION SERVICES TO A USER EQUIPMENT, ESPECIALLY FOR SUPPORTING AND PROVIDING A LOCATION CHECK FUNCTIONALITY AND/OR VERIFYING LOCATION-RELATED DATA INDICATIVE OF THE ACTUAL LOCATION OR POSITION OF THE USER EQUIPMENT, USER EQUIPMENT, SYSTEM OR TELECOMMUNICATIONS NETWORK, PROGRAM AND COMPUTER-READABLE MEDIUM**
VERFAHREN ZUR VERWENDUNG EINER SERVICE-ENABLER-ARCHITEKTURSCHICHT FÜR VERTIKALE ANWENDUNGEN, IN EINER IMPLEMENTIERUNG EINER VERTIKALEN ANWENDUNGSSCHICHT, ZUR BEREITSTELLUNG VON KOMMUNIKATIONSDIENSTEN FÜR EIN BENUTZERGERÄT, INSBESONDERE ZUR UNTERSTÜTZUNG UND BEREITSTELLUNG EINER STANDORTPRÜFUNGSFUNKTIONALITÄT UND/ODER ZUR VERIFIZIERUNG VON STANDORTBEZOGENEN DATEN, DIE DEN TATSÄCHLICHEN STANDORT ODER DIE POSITION DES BENUTZERGERÄTS ANZEIGEN, BENUTZERGERÄT, SYSTEM ODER TELEKOMMUNIKATIONSNETZ, PROGRAMM UND COMPUTERLESBARES MEDIUM
PROCEDE D'UTILISATION D'UNE COUCHE D'ARCHITECTURE D'ENABLISSEMENT DE SERVICES VERTICALES, DANS UNE MISE EN OEUVRE D'UNE COUCHE D'APPLICATION VERTICALE POUR FOURNIR DES SERVICES DE COMMUNICATION A UN DISPOSITIF UTILISATEUR, EN PARTICULIER POUR SUPPORTER ET FOURNIR UNE FONCTIONNALITE DE VERIFICATION DE LOCALISATION ET/OU POUR VERIFIER DES DONNEES LIEES A LA LOCALISATION INDIQUANT L'EMPLACEMENT REEL OU LA POSITION DU DISPOSITIF UTILISATEUR, DISPOSITIF UTILISATEUR, SYSTEME OU RESEAU DE TELECOMMUNICATION, PROGRAMME ET SUPPORT LISIBLE PAR ORDINATEUR

(43) Date of publication of application: 12.11.2025
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- US-A1- 2023 388 748
- "3rd Generation Partnership Project; Technical Specification Group Services and System Aspects; Service Enabler Architecture Layer for Verticals (SEAL); Functional architecture and information flows; (Release 18)", 2 April 2024 (2024-04-02), XP052618885, Retrieved from the Internet <URL:https://ftp.3gpp.org/3guInternal/3GPP_ultimate_versions_to_be_transposed/sentToDpc/23434-i80.zip 23434-i80.docx> [retrieved on 20240402]

## Description

### BACKGROUND

The present invention relates a method for using a service enabler architecture layer for verticals, SEAL, in a vertical application layer implementation, VAL implementation, for providing communication services to a user equipment, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client, wherein the service enabler architecture layer for verticals comprises a location management server that is able to realize a location check functionality and/or verifying location-related data indicative of the actual location or position of the user equipment.

Additionally, the present invention relates to a user equipment for using a service enabler architecture layer for verticals, SEAL, in a vertical application layer implementation, VAL implementation, for being provided with communication services, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client,
wherein the user equipment is configured to communicate with a service enabler architecture layer for verticals that comprises a location management server and that is able to realize a location check functionality and/or verifying location-related data indicative of the actual location or position of the user equipment.

Furthermore, the present invention relates to a system or to a telecommunications networks for using a service enabler architecture layer for verticals, SEAL, in a vertical application layer implementation, VAL implementation, for providing communication services to a user equipment, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client, wherein the service enabler architecture layer for verticals comprises a location management server that is able to realize a location check functionality and/or verifying location-related data indicative of the actual location or position of the user equipment.

Additionally, the present invention relates to a location management server or user equipment provided for being used in an inventive system or telecommunications network.

Furthermore, the present invention relates to a program and to a computer-readable medium for using a user equipment in the framework of service enabler architecture layer for verticals according to the inventive method.

In conventionally known telecommunications networks, it is known to use a user equipment with a telecommunications network in relation to or in the framework of service enabler architecture layer for verticals, SEAL. The basic functional architecture and information flows of the SEAL for Verticals is known from 3GPP TS 23.434 v18.8.0 (Release 18). 3GPP SA6 is currently working in release 19 on location management server enhancements. The current work is captured in TR23.700-72. The normative work done in 3GPP SA6 is covered in SEAL specification TS23.434 clause 9.

Furthermore, it is known from document US 2023/388748 A1 to employ Location Management Services of SEAL servers to receive and respond to monitor location subscription requests from VAL servers and to send either a notify presence message or a notify absence messages to the VAL server depending on whether a UE is located within an area of interest or not.

Currently the application in the user equipment - i.e. the location management client, LMC - does not have the possibility to check directly its location as it might be dependent on location-related data provided by the operating system of the user equipment and/or provided by a global navigation satellite system module of the user equipment.

Especially, the user equipment side is considered untrusted as there might be the possibility that the location-related data might not correspond to the actual (geographical) location or position of the user equipment (e.g. the user equipment might be spoofed or the device jailbroken, e.g. in an unintended or fraudulent manner.

However, for many applications or use cases, there is a need to confirm the (actual) location of the user equipment, i.e. for such applications or use cases it is important to either know (at least approximately) the actual location or position of the user equipment or, at least, to know whether the location-related data provided by the user equipment itself are (at least approximately) correct or not.

### SUMMARY

An object of the present invention is to provide a technically simple, effective and cost-effective solution for using a service enabler architecture layer for verticals, SEAL, in a vertical application layer implementation, VAL implementation, for providing communication services to a user equipment, using a vertical application layer server via a telecommunications network, especially for supporting and providing a location check functionality and/or verifying location-related data indicative of the actual location or position of the user equipment. A further object of the present invention is to provide a corresponding user equipment, a corresponding system or telecommunications network, a location management server, and a corresponding program and computer-readable medium.

The object of the present invention is achieved by a method for using a service enabler architecture layer for verticals, SEAL, in a vertical application layer implementation, VAL implementation, characterized in that, in order to provide communication services to a user equipment, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client,
wherein the service enabler architecture layer for verticals comprises a location management server that is able to realize a location check functionality and/or verifying location-related data indicative of the actual location or position of the user equipment, and, in order to support and to provide, by the location management server, a location check functionality by means of confirming location data and/or verifying location-related data indicative of the actual location or position of the user equipment towards a confirm location data consumer entity, the method comprises the following steps:
-- in a first step, the location management client transmits a confirm location request to the location management server in order for the location management server to perform a location check functionality and/or verifying location-related data indicative of the actual location or position of the user equipment,
-- in a second step, the location management client receives, from the location management server, a confirm location response, wherein the confirm location response comprises a confirm location status information, and the confirm location data consumer entity receives, likewise from the location management server, a confirm location service usage notification.

According to the present invention, it is advantageously possible that the location management server supports and/or provides the possibility to confirm and/or to check a user equipment-provided location information towards the location management service consumer entity - typically the vertical application layer server.
Hence, the use of a user equipment in relation to or in the framework of service enabler architecture layer for verticals, SEAL, is able to be improved according to the present invention.

Applications such as, e.g., Uber, Lyft, shopping apps, food ordering apps or the like would be able to know whether the respective user equipment/customer is at the service location where they intend to send the order or to initially approve the customer for a specific service. Uber or Lift would not send a car to a user equipment/user which location is considered as not verified to save rides to places where customer would not be present. The ordering food application would not initiate the customer order if the location is not confirmed to safe false orders/time and resources of related suppliers. According to another example, a bank or banking application would not allow registration if the customer is not within specific country.

According to the present invention, it is important that such checks are able to be controlled by the application running on both the user equipment and the application server/VAL server.

According to the present invention, it is especially possible to support and provide a location check functionality and/or verifying location-related data indicative of the actual location or position of the user equipment, and to use a service enabler architecture layer for verticals, SEAL, in a vertical application layer implementation, VAL implementation, for providing communication services to the user equipment, using a vertical application layer server via the telecommunications network.
According to the present invention, the service enabler architecture layer for verticals comprises a location management server and a location management server or location management system is responsible for conducting the location check functionality.

In order to support and to provide, by the location management server (or location management system), a location check functionality by means of confirming location data and/or verifying location-related data indicative of the actual location or position of the user equipment towards a confirm location data consumer entity, the method comprises the following steps:
-- in a first step, the location management client transmits a confirm location request to the location management server in order for the location management server to perform a location check functionality and/or verifying location-related data indicative of the actual location or position of the user equipment,
-- in a second step, the location management client receives, from the location management server, a confirm location response, wherein the confirm location response comprises a confirm location status information, and the confirm location data consumer entity receives, likewise from the location management server, a confirm location service usage notification.

This advantageously provides the possibility, according to the present invention, to provide procedures, service flows and APIs to confirm a user equipment-provided location information.

According to the present invention, it is furthermore advantageously possible and preferred that the second step involve using, as the confirm location data consumer entity, the vertical application layer server.

It is thereby advantageously possible to realize and implement the inventive method in a comparatively simple and efficient manner.

Furthermore, it is advantageously possible and preferred according to the present invention that the first and second steps involve using at least part of the following information elements between the location management client and the location management server:
-- as part of the confirm location request:
   -- an identifier of the user equipment whose location or position information is to be confirmed,
   -- the user equipment provided location or position taken from a functionality within the user equipment, especially involving using a global navigation satellite system, wherein this especially includes at least one of the following: a vertical accuracy, a timestamp information, a course/direction information, a longitude information, a speed information, a latitude information, a horizontal accuracy information, an altitude information,
   -- a timestamp information of the user equipment-provided location or position information,
   -- an application identifier information,
   -- an information regarding the radio cell identity, CellID, identified in the user equipment from user equipment-signaling,
   -- an identifier information regarding the mobile equipment, especially the International Mobile Equipment Identifier information, IMEI,
-- as part of the confirm location response:
   -- an identifier of the user equipment whose location or position information is to be confirmed,
   -- an information regarding the confirm location status, especially the result of the location check functionality, wherein the confirm location status especially takes one value out of at least a subset out of the following: "unknown", "verified", "mismatch in the same country", "mismatch in another country", "roaming country mismatch", "error unauthorized", "error other",
   -- a timestamp information of the confirm location check,
   -- an application identifier information,
   -- an information regarding whether the user equipment is connected to a specific radio cell, especially whether the user equipment is connected to the provided radio cell or whether it is not connected to this radio cell.

It is thereby advantageously possible to realize and implement the inventive method in a comparatively simple and efficient manner.

According to the present invention, it is furthermore advantageously possible and preferred that the second step involves using at least part of the following information elements between the confirm location data consumer entity and the location management server
-- as part of the confirm location service usage notification:
   -- an identifier of the requesting vertical application layer server and/or vertical application layer user,
   -- an identifier of the user equipment whose location or position information was confirmed, and
   -- a timestamp information of the confirm location service notification.

It is thereby advantageously possible to realize and implement the inventive method in a comparatively simple and efficient manner.

Furthermore, it is advantageously possible and preferred according to the present invention that, in a third step preceding the first step, the vertical application layer server transmits, to the location management server, confirm location service subscription request in order to be provided with confirm location service data relating to a specific application, wherein the network location management server transmits, to the vertical application layer server, a confirm location service subscription response.

It is thereby advantageously possible to efficiently realize and implement the inventive method in a comparatively simple and flexible manner.

Furthermore, it is advantageously possible and preferred according to the present invention that subsequent to the first step and prior to the second step, the location management server performs a user equipment location verification or location check using the telecommunications network, especially a network exposure function of the telecommunications network.

It is thereby advantageously possible to realize and implement the inventive method in a comparatively simple and efficient manner.

Furthermore, it is advantageously possible and preferred according to the present invention that the third step involves using at least part of the following information elements between the vertical application layer server and the location management server:
-- as part of the confirm location service subscription request:
   -- an identifier of the requesting vertical application layer server and/or vertical application layer user,
   -- an application identifier information regarding the application for which the subscription is requested and/or regarding the identity of the vertical application layer service for which the confirm location service is subscribed,
-- as part of the confirm location service subscription response:
   -- an identifier of the requesting vertical application layer server and/or vertical application layer user,
   -- an information regarding the confirm location service subscription status, especially the result of the confirm location service subscription request.

It is thereby advantageously possible to realize and implement the inventive method in a comparatively simple and efficient manner.

Furthermore, the present invention relates to a user equipment for using a service enabler architecture layer for verticals, SEAL, in a vertical application layer implementation, VAL implementation, for being provided with communication services, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client, wherein the user equipment is configured to communicate with a service enabler architecture layer for verticals that comprises a location management server and that is able to realize a location check functionality and/or verifying location-related data indicative of the actual location or position of the user equipment, wherein, in order for being supported and/or for being provided with a location check functionality by means of confirming location data and/or verifying location-related data indicative of the actual location or position of the user equipment, the user equipment is configured such that:
-- the location management client transmits a confirm location request to the location management server in view for the location management server to perform a location check functionality and/or verifying location-related data indicative of the actual location or position of the user equipment,
-- the location management client receives, from the location management server, a confirm location response, wherein the confirm location response comprises a confirm location status information, wherein especially the confirm location data consumer entity receives, likewise from the location management server, a confirm location service usage notification.

Furthermore, the present invention relates to a system or to a telecommunications network, comprising the inventive user equipment and a location management server,for using a service enabler architecture layer for verticals, SEAL, in a vertical application layer implementation, VAL implementation, characterized in that, in order to provide communication services to a user equipment, using a vertical application layer server via a telecommunications network, especially for supporting and providing a location check functionality and/or verifying location-related data indicative of the actual location or position of the user equipment, wherein the user equipment is a vertical application layer user equipment comprising a vertical application layer client, VAL client, and an location management client,
wherein the service enabler architecture layer for verticals comprises a location management server that is able to realize a location check functionality and/or verifying location-related data indicative of the actual location or position of the user equipment, and, in order to support and to provide, by the location management server, a location check functionality by means of confirming location data and/or verifying location-related data indicative of the actual location or position of the user equipment towards a confirm location data consumer entity, the system or telecommunications network is configured such that:
-- the location management client transmits a confirm location request to the location management server in order for the location management server to perform a location check functionality and/or verifying location-related data indicative of the actual location or position of the user equipment,
-- the location management client receives, from the location management server, a confirm location response, wherein the confirm location response comprises a confirm location status information, and the confirm location data consumer entity receives, likewise from the location management server, a confirm location service usage notification.

Additionally, the present invention relates to a program comprising a computer readable program code which, when executed on a computer and/or on a user equipment and/or on a network node of a telecommunications network and/or on a location management server and/or on a vertical application layer server and/or in part on a network node of a telecommunications network and/or in part on a location management server and/or in part on a vertical application layer server, causes the computer and/or the user equipment and/or the network node of a telecommunications network and/or the location management server and/or the vertical application layer server to perform the inventive method.

Additionally, the present invention relates to a computer-readable medium comprising instructions which when executed on a computer and/or on a user equipment and/or on a network node of a telecommunications network and/or on a location management server and/or on a vertical application layer server and/or in part on a network node of a telecommunications network and/or in part on a location management server and/or in part on a vertical application layer server, causes the computer and/or the user equipment and/or the network node of a telecommunications network and/or the location management server and/or the vertical application layer server to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

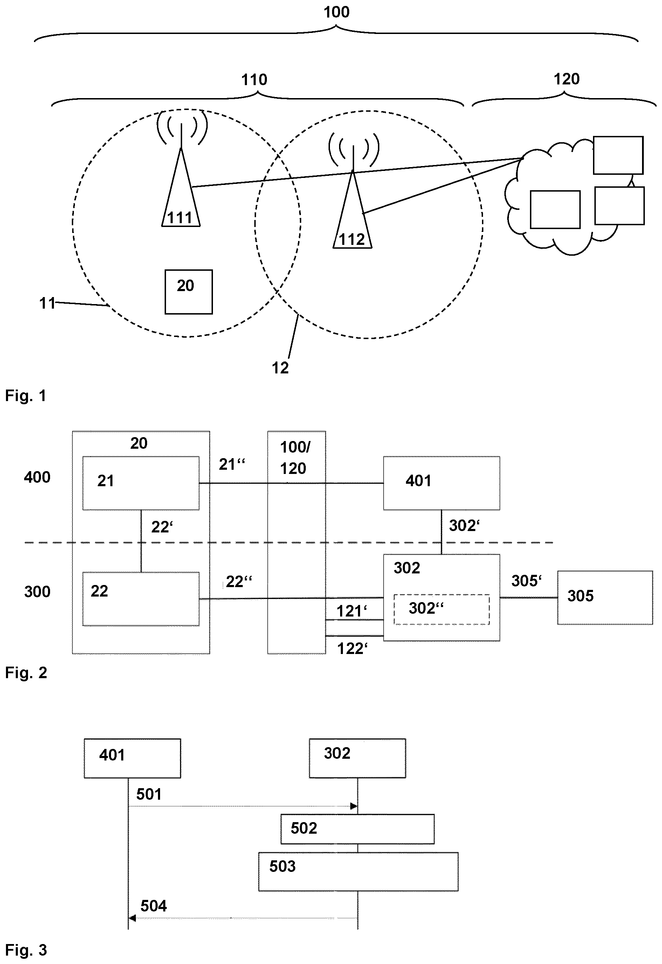

Figure 1 schematically illustrates a telecommunications network, comprising an access network and a core network, and a user equipment, wherein a service enabler architecture layer for verticals, SEAL, is used in a vertical application layer (VAL) implementation for providing communication services to a user equipment, using a vertical application layer server via the telecommunications network, especially for supporting and providing a location check functionality and/or verifying location-related data indicative of the actual location or position of the user equipment; the user equipment is a vertical application layer user equipment comprising a vertical application layer (VAL) client and a location management client, and the service enabler architecture layer for verticals comprises a location management server.
Figure 2 schematically illustrates a representation of an exemplary implementation of the service enabler architecture layer for verticals for supporting and providing a location check functionality and/or verifying location-related data indicative of the actual location or position of the user equipment with the user equipment being a vertical application layer user equipment comprising the vertical application layer (VAL) client and the location management client, and the service enabler architecture layer for verticals comprising the location management server.
Figure 3 schematically illustrates a communication diagram between the vertical application layer server and the location management server.

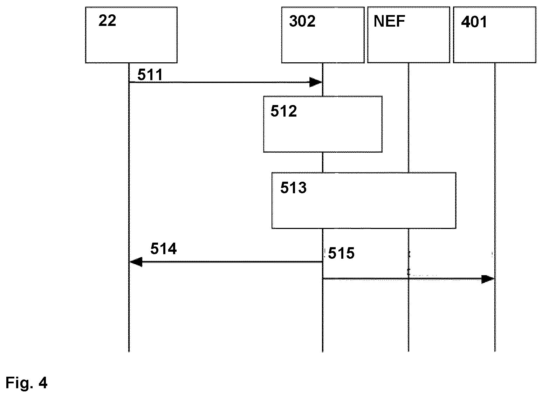

Figure 4 schematically illustrates a communication diagram between the location management client, the location management server, a network exposure function, and the vertical application layer sever.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a user equipment 20 is schematically shown. A service enabler architecture layer for verticals, SEAL, is used in a vertical application layer (VAL) implementation for providing communication services to the user equipment 20, using a vertical application layer server (not explicitly and separately shown in Figure 1) via the telecommunications network 100, especially for supporting and providing a location check functionality and/or verifying location-related data indicative of the actual location or position of the user equipment, the user equipment 20 being a vertical application layer user equipment comprising a vertical application layer (VAL) client and a location management client, and the service enabler architecture layer for verticals comprises a location management server.

The user equipment 20 uses services provided by a vertical application layer, VAL, service provider domain or vertical application layer server being typically (but not necessarily) external to the telecommunications network 100, wherein the vertical application layer service provider domain comprises at least one location management server (not explicitly and separately shown in Figure 1) to provide services to the user equipment 20, especially using the telecommunications network 100.

The telecommunications network 100 is especially realized as mobile (cellular) communication network 100. The telecommunications network 100, especially its core network 120, typically comprises a number of network functions or services that are, however and for the sake of simplification, not explicitly and separately indicated, in Figure 1, by means of reference signs. The access network 110 of the telecommunications network 100 exemplarily comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the telecommunications network 100) is connected, via a radio interface or air interface, to the first base station entity 111 of the access network 110 of the telecommunications network 100.

According to the present invention, the user equipment 20 is a vertical application layer user equipment 20, especially comprising a vertical application layer client (VAL client) - not explicitly and separately shown in Figure 1 by means of a reference sign - and a location management client - likewise not separately shown in Figure 1 by means of a reference sign.
Furthermore, the user equipment 20 is typically, but not necessarily, mobile - i.e. able to move - with respect to the - typically, but not necessarily, static - radio cells 11, 12 or corresponding base station entities 111, 112 of the access network 110.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

According to the present invention, it is advantageously possible to use the user equipment 20 in relation to or in the framework of service enabler architecture layer for verticals, SEAL, with the telecommunications network 100.
Typically, the telecommunications network 100 provides the user equipment 20 to use a location management-related application.

In Figure 2, a representation of an exemplary implementation of the service enabler architecture layer for verticals 300 and the vertical application layer 400, as well as their respective components and/or entities or functionalities - especially for supporting and providing slice usage statistics data regarding the at least one (specific) network slice -, is schematically shown, mainly corresponding to the architecture as described in TS 23.434, Figure 9.2.2.1.

The user equipment 20 is represented as a vertical application layer user equipment 20 comprising the vertical application layer (VAL) client 21 and the location management client 22, and the service enabler architecture layer for verticals 300 comprising the location management server 302 as well as a fused location function 302". Between the vertical application layer (VAL) client 21 (of the user equipment 20) and the location management client 22 (of the user equipment 20), an interface or reference point 22' is realized, especially of the type LM-C (location management-client).

When the fused location function 302" is present, the location management server 302, may use the location information from multiple sources to determine a more accurate user equipment location. The fused location function may select one or more location sources and location methods based on the requested location quality-of-service which obtained from the location management server.

Between the vertical application layer server 401 and the vertical application layer (VAL) client 21 (of the user equipment 20), an interface or reference point 21" is realized, especially of the type VAL-UU; furthermore, between the location management client 22 and the location management server 302, an interface or reference point 22" is realized, especially of the type LM-UU.

The location management server 302, acting as application function (AF), especially communicates with the telecommunications network 100, especially its core network 120, i.e., typically, 5G core network functions, over the following interfaces or reference points towards network functions or services of the core network 120 (that are not explicitly shown in Figure 2):
-- an T8/N33 reference point 121' to an network exposure function, NEF, of the core network 120, and
-- an Le interface or reference point 122' that supports the interactions between the location management server and the gateway mobile location center (GMLC) and is specified in 3GPP TS 23.273.

Especially, the location management server 302 comprises a fused location function 302" or functionality.

According to the representation schematically shown in Figure 2, the vertical application layer server 401 is able to be understood as a vertical application layer location management service customer. According to such a situation, scenario or embodiment, between the vertical application layer server 401 and the location management server 302, an interface or reference point 302' is realized, especially of the type LM-S (location management-server).
Hence, the vertical application layer server 401 (or the vertical application layer servers) communicates with the location management server 302 over the LM-S reference point 302'.

According to the present invention, the vertical application layer server 401 might (especially regarding its communication with the location management server 302 or regarding location management data) is used such that the vertical application layer server 401 acts as a vertical application layer location management service customer.

It is to be understood, that a plurality of vertical application layer servers (corresponding to the vertical application layer server 401) are able to be present and part of the vertical application layer 400 (but are not represented in Figure 2 for the sake of simplicity).

Via an interface (or reference point) location management-third party, LM-3P, 305' the location management server 302 might be connected to a third party location management server 305, or to a plurality thereof.

In Figure 3, a communication diagram between the vertical application layer server 401 and the location management server 302 is schematically shown.

In a first processing step 501, a confirm location service subscription request is transmitted, by the vertical application layer server 401, to the location management server 302. In a second processing step 502, the location management server 302 performs an authorization check, and, in a third processing step 503, the location management server 302 subscribes (or performs a subscription) of the vertical application layer server 401 and/or of the respective requesting application to the confirm location service for the specific (requesting) application. In a fourth processing step 504, the confirm location service subscription response is transmitted, by the location management server 302, to the vertical application layer server 401.

Hence, according to the present invention, the application is running on a vertical application layer (VAL) server 401. The application would like to use the confirm location service and subscribes - as a preparatory step in order to operatively use the confirm location service - to the location management system (or location management server 302) as shown in Figure 3.
Step 1 (first processing step 501): The vertical application layer VAL server 401 subscribes to the location management system (or the location management server 302) to receive notification every time the user equipment 20 is using a specific application that is requesting a confirmation of location (of the user equipment 20).
Step 2 (second processing step 502): The location management system or location management server 302 checks if the VAL server 401 is authorized to subscribe for the confirm location service notifications for a specific application identifier (i.e. relating to the requesting application).
Step 3 (third processing step 503): If the VAL server 401 and the specific application are authorized to subscribe for confirm location service, the location management system or location management server 302 creates the subscription based on provided parameters in the request.
Step 4 (fourth processing step 504): The location management system or location management server 302 sends, to the vertical application layer server 401, the confirm location service subscription response.

In Figure 4, a communication diagram between the location management client 22, the location management server 302, a network exposure function NEF, and the vertical application layer sever 401 is schematically shown. This communication corresponds to operatively using the confirm location service after the preparatory step (as shown in Figure 3) has been performed.

In a first processing step 511, the location management client 22 transmits a confirm location request to the location management server 302 (and the location management server 302 receives the confirm location request). In a second processing step 512, the location management server performs a subscription check for the confirm location service (related to the respective application or application function having triggered the confirm location request and/or related to the respective application or application function and the location management client 22). In a third processing step 513, the check user equipment location via network exposure function/T8/T33/LM-3P is performed, especially as described in TS 29.572, TS23.273 and/or TS 23.271. In a fourth processing step 514, the location management client 22 (i.e. as part of the user equipment 20) receives, from the location management server 302 (and the location management server 302 transmits), the confirm location response (or confirm location report) or corresponding message, and, in a fifth processing step 515, the confirm location data consumer entity 401 receives, from the location management server 302, the confirm location service usage notification or corresponding message.
According to the present invention, the confirm location response (or confirm location report) comprises a confirm location status information.

Hence, according to the present invention, a new API (application programming interface) for location check is able to be exposed to the location management client (LMC) 22 from the location management server (LMS) 302 (especially via the LM-UU reference point). Especially, this is in the context of the Rel19 FS_eLSAPP study item under 3GPP SA6 responsibility. With this approach, it is advantageously possible that location management client 22 (i.e. the user equipment 20) is able to request a location management service, especially in the form of the confirm location service, - and be provided with such a service - as a 5GS service, i.e. as part of the telecommunications network 100 (or provided by the telecommunications network 100). Hence, such location management service is able to be provided by the mobile network operator (of the telecommunications network 100).

According to the present invention, it is especially advantageous that, at the same time, this functionality is able to provide a solution such that the user equipment 20 (i.e. the location management client 22) does not necessarily receive an exact location or location information from the location management server 302 (or form the telecommunications network 100), but, rather, only indications confirming certain location-related parameters or pieces of information, e.g. the (radio) cell, the country, the city, the home operator, the roaming operator. Such location-related parameters (or indications or pieces of information) are typically enough to confirm the location of the user equipment 20, at least for the purposes of various applications where a location-related confirmation is important. Uber, Lift, shopping apps, ordering food apps would be able to know if the respective user equipment 20 or customer is at the service location where they intend to send the order or to initially approve the customer for a specific service. At the same time the application server (VAL server 401) on which this specific application is running (Uber, Lyft, etc) should be able to receive notifications for such user equipment 20 checks.

In order to operatively using the confirm location functionality or service, it is typically assumed that the location management client (LMC) and/or the application in the user equipment 20 gets - e.g. from a GPS functionality or module in the user equipment 20, or, more generally, from a global navigation satellite system functionality in the user equipment 20 - its location, or, rather a location information supposedly corresponding, or indicating, the location or the position of the user equipment 20. The application in the user equipment 20 (related to the application of the vertical application layer server 401) wants to check whether the user equipment-provided location or location information actually corresponds to the correct (or almost correct) location.
In such a situation, operatively using the confirm location service, requires the following pre-conditions:
(1) The location management client 22, LMC, is authorized to discover and to use the confirm location API provided by the location management system or location management server 302; (2) the location management system or location management server 302 is authorized to use Nnef Event Exposure API, based on SLA with NEF/5GS of mobile network operator of the telecommunications network 100; (3) it is assumed there is user consent given in the user equipment 20 for exposing the GPS location information (or other global navigation satellite system location information) from the user equipment 20 to the location management system or the location management server 302.
In such a situation, and shown in Figure 4, the following steps are performed in order to conduct the confirm location service:
Step 1 (first processing step 511): The user equipment 20 sends the confirm location request from the location management client 22 towards the location management system or the location management server 302. The confirm location request typically contains a user equipment-provided location information (especially a GPS (or other global navigation satellite system) location measured from the GPS chip (or other global navigation satellite system chip) of the user equipment 20). Additional attributes the confirm location request might comprise are: a vertical accuracy, a timestamp, a course/direction, a longtitude, a speed, a latitude, a horizontal accuracy, an altitude, a carrier name, a verify location token, a cell id (cell id is known to the user equipment 20 from the network signalling), an application identifier.
Step 2 (second processing step 512): The location management system or location management server 302 shall check if there is (a valid) subscription (based on the vertical application layer subscription, cf. Figure 3) for confirm location service with the specific application identifier received in step1.
Step 3 (third processing step 513): If such subscription is present, then the location management system or location management server 302 requests the user equipment location from the 5G core/location management function, especially via the network exposure function (location management system sends a determine location operation via network exposure function (N33 interface) and using Nlmf_Location API defined in TS29.572 - parameters available from the location reporting are described in this TS-document). It also requests the accuracy (or an accuracy information or parameter) to be a parameter present in the response. The location management system or location management server 302 can also perform a location information request to the gateway mobile location centre (GMLC) directly or via the network exposure function (as defined in TS 23.273), acting as application function. The location management system or location management server 302 can also perform a location information request to (one or a plurality of) third party location servers 305 via the LM-3P interface. The location management system or location management server 302 can also use the T8 interface to obtain the user equipment location. Alternatively, the location management system or location management server 302 might already have the user equipment location based on the methods described in TS23.434.
   In case the response arrives (at the location management system location management server 302), it contains the user equipment location from the telecommunications network 100 (i.e. based on network information), and the location management system or location management server 302 checks it and provides the reply (in Step 4, corresponding to the fourth processing step 514) to the location management client 22 (LMC) - with a location status information, especially corresponding to the following different possibilities regarding the ((confirm) location-related) content of the confirm location response (message) i.e. as the reply of the location: unknown, verified, mismatch in the same country, mismatch in other country, roaming country mismatch, error unauthorized, error other. Regarding the cell status, different possibilities regarding the reply might apply: connected to a specified (radio) cell, not connected to a specified (radio) cell.
Step 5 (fifth processing step 515): The location management system or location management server 302 sends a notification towards the vertical application layer (VAL) server 401 with the user equipment identifier and an information indicating the application using the service.

As the location management system or location management server 302 matches the request from the location management client 22 with the response from the Nlmf_Location API, this saves additional efforts if the network has to do the matching (the efforts are in the location management system or the location management server 302); this also saves additional computing power at the user equipment 20 (the efforts are in the location management system or the location management server 302).

Such a verify location API is able to be used by multiple applications used in the user equipment 20, using the location services provided from the network 100. In operative use, the respective application logic first uses the API according to the present invention before dealing with customer requests and respectively provide its services after the (user equipment-provided) location (information) of the user equipment 20 has actually been confirmed.

The application programming interface or application programming interfaces are able to be described as comprising the API operations of "confirm_location" (known consumer(s): location management client 22; communication type: request/response; messages: confirm location request/confirm location response) especially to be used operatively in order to confirm a user equipment-provided location information) and the API operations of "subscribe_confirm_location_service",
"unsubscribe_confirm_location_service", "notify_confirm_location_service" (known consumer(s): vertical application layer server 401; communication type: subscribe/notify; messages: confirm location service subscription request/confirm location service subscription response/confirm location service usage notification) to be used, at least regarding the subscribe/unsubscribe operations, in a preparatory step in order to be able to operatively use the confirm location service and the notify functionality. Especially according to the present invention, the respective messages have the following information content or elements (in the following the name of the respective information element is provided on the left, a status information (indicating "mandatory" or "optional") in the middle and a description on the right):

### Confirm location request:

| | | |
|---|---|---|
| UE ID | M | The identifier of UE whose location information is to be confirmed |
| UE provided location | M | UE provided location taken from functionality within UE (e.g. GPS). It can include vertical accuracy, timestamp, course/direction, longtitude, speed, latitude, horizontal accuracy, altitude. |
| CelllD | O | CelllD identified in the UE from UE signalling |
| Timestamp | M | Timestamp of the UE provided location |
| ME ID | O | Mobile equipment identifier, e.g. IMEI |
| Application ID | M | Application identifier |

### Confirm location response:

| | | |
|---|---|---|
| UE ID | M | The identifier of UE whose location information is to be confirmed |
| Confirm location status | M | unknown, verified, mismatch in the same country, mismatch in other country, roaming country mismatch, error unauthorized, error other |
| CelllD status | O | Connected to provided cell, not connected to provided cell |
| Timestamp | M | Timestamp of the confirm location check |
| Application ID | M | Application identifier |

### Confirm location service subscription request:

| | | |
|---|---|---|
| Identity | M | Identity of the requesting VAL server/VAL user |
| Application identifier/VAL service id | M | Application identifier for which is the subscription request/ Identity of the VAL service for which the confirm location service is subscribed. |

### Confirm location service subscription response:

| | | |
|---|---|---|
| Identity | M | Identity of the requesting VAL server/VAL user |
| Subscription status | M | It indicates the subscription result |

### Confirm location service usage notification:

| | | |
|---|---|---|
| Identity | M | Identity of the requesting VAL server/VAL user |
| UE ID | M | The identifier of UE whose location information was confirmed |
| Timestamp | O | Timestamp of the confirm location service notification |

## Claims

1. Method for using a service enabler architecture layer for verticals, SEAL, in a vertical application layer implementation, VAL implementation, **characterized in that**, in order to provide communication services to a user equipment (20), using a vertical application layer server (401) via a telecommunications network (100), especially for supporting and providing a location check functionality and/or verifying location-related data indicative of the actual location or position of the user equipment (20), wherein the user equipment (20) is a vertical application layer user equipment (20) comprising a vertical application layer client, VAL client, (21) and a location management client (22),
wherein the service enabler architecture layer for verticals comprises a location management server (302) that is able to realize a location check functionality and/or verifying location-related data indicative of the actual location or position of the user equipment (20),
and, in order to support and to provide, by the location management server (302), a location check functionality by means of confirming location data and/or verifying location-related data indicative of the actual location or position of the user equipment (20) towards a confirm location data consumer entity (401), the method comprises the following steps:
-- in a first step, the location management client (22) transmits a confirm location request to the location management server (302) in order for the location management server (302) to perform a location check functionality and/or verifying location-related data indicative of the actual location or position of the user equipment (20),
-- in a second step, the location management client (22) receives, from the location management server (302), a confirm location response, wherein the confirm location response comprises a confirm location status information, and the confirm location data consumer entity (401) receives, likewise from the location management server (302), a confirm location service usage notification.

2. Method according to claim 1, wherein the second step involve using, as the confirm location data consumer entity (401), the vertical application layer server (401).

3. Method according to one of the preceding claims, wherein the first and second steps involve using at least part of the following information elements between the location management client (22) and the location management server (302):
-- as part of the confirm location request:
-- an identifier of the user equipment (20) whose location or position information is to be confirmed,
-- the user equipment provided location or position taken from a functionality within the user equipment (20), especially involving using a global navigation satellite system, wherein this especially includes at least one of the following: a vertical accuracy, a timestamp information, a course/direction information, a longitude information, a speed information, a latitude information, a horizontal accuracy information, an altitude information,
-- a timestamp information of the user equipment-provided location or position information,
-- an application identifier information,
-- an information regarding the radio cell identity, CellID, identified in the user equipment (20) from user equipment-signaling,
-- an identifier information regarding the mobile equipment, especially the International Mobile Equipment Identifier information, IMEI,
-- as part of the confirm location response:
-- an identifier of the user equipment (20) whose location or position information is to be confirmed,
-- an information regarding the confirm location status, especially the result of the location check functionality, wherein the confirm location status especially takes one value out of at least a subset out of the following: "unknown", "verified", "mismatch in the same country", "mismatch in another country", "roaming country mismatch", "error unauthorized", "error other",
-- a timestamp information of the confirm location check,
-- an application identifier information,
-- an information regarding whether the user equipment (20) is connected to a specific radio cell, especially whether the user equipment (20) is connected to the provided radio cell or whether it is not connected to this radio cell.

4. Method according to one of the preceding claims, wherein the second step involves using at least part of the following information elements between the confirm location data consumer entity (401) and the location management server (302)
-- as part of the confirm location service usage notification:
-- an identifier of the requesting vertical application layer server (401) and/or vertical application layer user,
-- an identifier of the user equipment (20) whose location or position information was confirmed, and
-- a timestamp information of the confirm location service notification.

5. Method according to one of the preceding claims, wherein, in a third step preceding the first step, the vertical application layer server (401) transmits, to the location management server (302), confirm location service subscription request in order to be provided with confirm location service data relating to a specific application, wherein the network location management server (302) transmits, to the vertical application layer server (401), a confirm location service subscription response.

6. Method according to one of the preceding claims, wherein subsequent to the first step and prior to the second step, the location management server (302) performs a user equipment location verification or location check using the telecommunications network (100), especially a network exposure function of the telecommunications network (100).

7. Method according to one of the preceding claims, wherein the third step involves using at least part of the following information elements between the vertical application layer server (401) and the location management server (302):
-- as part of the confirm location service subscription request:
-- an identifier of the requesting vertical application layer server (401) and/or vertical application layer user,
-- an application identifier information regarding the application for which the subscription is requested and/or regarding the identity of the vertical application layer service for which the confirm location service is subscribed,
-- as part of the confirm location service subscription response:
-- an identifier of the requesting vertical application layer server (401) and/or vertical application layer user,
-- an information regarding the confirm location service subscription status, especially the result of the confirm location service subscription request.

8. User equipment (20) for using a service enabler architecture layer for verticals, SEAL, in a vertical application layer implementation, VAL implementation, for being provided with communication services, using a vertical application layer server (401) via a telecommunications network (100), especially for supporting and providing a location check functionality and/or verifying location-related data indicative of the actual location or position of the user equipment (20), wherein the user equipment (20) is a vertical application layer user equipment (20) comprising a vertical application layer client, VAL client, (21) and an location management client (22),
wherein the user equipment (20) is configured to communicate with a service enabler architecture layer for verticals that comprises a location management server (302) and that is able to realize a location check functionality and/or verifying location-related data indicative of the actual location or position of the user equipment (20),
wherein, in order for being supported and/or for being provided with a location check functionality by means of confirming location data and/or verifying location-related data indicative of the actual location or position of the user equipment (20), the user equipment (20) is configured such that:
-- the location management client (22) transmits a confirm location request to the location management server (302) in view for the location management server (302) to perform a location check functionality and/or verifying location-related data indicative of the actual location or position of the user equipment (20),
-- the location management client (22) receives, from the location management server (302), a confirm location response, wherein the confirm location response comprises a confirm location status information, wherein especially the confirm location data consumer entity (401) receives, likewise from the location management server (302), a confirm location service usage notification.

9. System or telecommunications network (100), comprising a user equipment (20) according to claim 8 and a location management server (302), for using a service enabler architecture layer for verticals, SEAL, in a vertical application layer implementation, VAL implementation, **characterized in that**, in order to provide communication services to the user equipment (20), using a vertical application layer server (401) via a telecommunications network (100), especially for supporting and providing a location check functionality and/or verifying location-related data indicative of the actual location or position of the user equipment (20), wherein the user equipment (20) is a vertical application layer user equipment (20) comprising a vertical application layer client, VAL client, (21) and an location management client (22),
wherein the service enabler architecture layer for verticals comprises the location management server (302) that is able to realize a location check functionality and/or verifying location-related data indicative of the actual location or position of the user equipment (20),
and, in order to support and to provide, by the location management server (302), a location check functionality by means of confirming location data and/or verifying location-related data indicative of the actual location or position of the user equipment (20) towards a confirm location data consumer entity (401), the system or telecommunications network (100) is configured such that:
-- the location management client (22) transmits a confirm location request to the location management server (302) in order for the location management server (302) to perform a location check functionality and/or verifying location-related data indicative of the actual location or position of the user equipment (20),
-- the location management client (22) receives, from the location management server (302), a confirm location response, wherein the confirm location response comprises a confirm location status information, and the confirm location data consumer entity (401) receives, likewise from the location management server (302), a confirm location service usage notification.

10. Program comprising a computer readable program code which, when executed on a computer and/or on a user equipment (20) and/or on a network node of a telecommunications network (100) and/or on a location management server (302) and/or on a vertical application layer server (401) and/or in part on a network node of a telecommunications network (100) and/or in part on a location management server (302) and/or in part on a vertical application layer server (401), causes the computer and/or the user equipment (20) and/or the network node of a telecommunications network (100) and/or the location management server (302) and/or the vertical application layer server (401) to perform a method according one of claims 1 to 7.

11. Computer-readable medium comprising instructions which when executed on a computer and/or on a user equipment (20) and/or on a network node of a telecommunications network (100) and/or on a location management server (302) and/or on a vertical application layer server (401) and/or in part on a network node of a telecommunications network (100) and/or in part on a location management server (302) and/or in part on a vertical application layer server (401), causes the computer and/or the user equipment (20) and/or the network node of a telecommunications network (100) and/or the location management server (302) and/or the vertical application layer server (401) to perform a method according to one of claims 1 to 7.

## Patentansprüche

1. Verfahren zur Verwendung einer Dienstermöglichungsarchitekturebene für Vertikale, SEAL, in einer vertikalen Anwendungsebenen-Implementierung, VAL-Implementierung, **dadurch gekennzeichnet, dass**, um einem Benutzergerät (20) Kommunikationsdienste bereitzustellen, unter Verwendung eines vertikalen Anwendungsebenenservers (401) über ein Telekommunikationsnetzwerk (100), insbesondere zur Unterstützung und Bereitstellung einer Standortprüffunktionalität und/oder zur Verifizierung standortbezogener Daten, die auf den tatsächlichen Standort oder die Position des Benutzergeräts (20) hinweisen, wobei das Benutzergerät (20) ein vertikales Anwendungsebenen-Benutzergerät (20) ist, das einen vertikalen Anwendungsebenenclient, VAL-Client, (21) und einen Standortverwaltungsclient (22) umfasst, wobei die Dienstermöglichungsarchitekturebene für Vertikale einen Standortverwaltungsserver (302) umfasst, der in der Lage ist, eine Standortprüffunktionalität zu realisieren und/oder standortbezogene Daten zu verifizieren, die auf den tatsächlichen Standort oder die Position des Benutzergeräts (20) hinweisen, und, um durch den Standortverwaltungsserver (302) eine Standortprüffunktionalität durch Bestätigung von Standortdaten und/oder Verifizierung standortbezogener Daten, die auf den tatsächlichen Standort oder die Position des Benutzergeräts (20) hinweisen, gegenüber einer Standortbestätigungsdatenverbraucherentität (401) zu unterstützen und bereitzustellen, das Verfahren die folgenden Schritte umfasst:
- in einem ersten Schritt übermittelt der Standortverwaltungsclient (22) eine Standortbestätigungsanfrage an den Standortverwaltungsserver (302), damit der Standortverwaltungsserver (302) eine Standortprüffunktionalität durchführt und/oder standortbezogene Daten verifiziert, die auf den tatsächlichen Standort oder die Position des Benutzergeräts (20) hinweisen,
- in einem zweiten Schritt empfängt der Standortverwaltungsclient (22) vom Standortverwaltungsserver (302) eine Standortbestätigungsantwort, wobei die Standortbestätigungsantwort eine Standortbestätigungsstatusinformation umfasst, und die Standortbestätigungsdatenverbraucherentität (401) empfängt ebenfalls vom Standortverwaltungsserver (302) eine Standortbestätigungsdienstnutzungsbenachrichtigung.

2. Verfahren nach Anspruch 1, wobei der zweite Schritt die Verwendung des vertikalen Anwendungsebenenservers (401) als Standortbestätigungsdatenverbraucherentität (401) beinhaltet.

3. Verfahren nach einem der vorhergehenden Ansprüche, wobei der erste und zweite Schritt die Verwendung mindestens eines Teils der folgenden Informationselemente zwischen dem Standortverwaltungsclient (22) und dem Standortverwaltungsserver (302) beinhalten:
- als Teil der Standortbestätigungsanfrage:
- eine Kennung des Benutzergeräts (20), dessen Standort- oder Positionsinformation bestätigt werden soll,
- die vom Benutzergerät bereitgestellte Standort- oder Positionsinformation aus einer Funktionalität innerhalb des Benutzergeräts (20), insbesondere unter Verwendung eines globalen Navigationssatellitensystems, wobei dies insbesondere mindestens eines der folgenden umfasst: eine vertikale Genauigkeit, eine Zeitstempelinformation, eine Kurs-/Richtungsinformation, eine Längengradinformation, eine Geschwindigkeitsinformation, eine Breitengradinformation, eine horizontale Genauigkeitsinformation, eine Höheninformation,
- eine Zeitstempelinformation der vom Benutzergerät bereitgestellten Standort- oder Positionsinformation,
- eine Anwendungskennung,
- eine Information bezüglich der Funkzellenidentität, CellID, die im Benutzergerät (20) aus der Benutzergeräte-Signalisierung identifiziert wurde,
- eine Kennungsinformation bezüglich des Mobilgeräts, insbesondere die internationale Mobilgerätekennung, IMEI,
- als Teil der Standortbestätigungsantwort:
- eine Kennung des Benutzergeräts (20), dessen Standort- oder Positionsinformation bestätigt werden soll,
- eine Information bezüglich des Standortbestätigungsstatus, insbesondere das Ergebnis der Standortprüffunktionalität, wobei der Standortbestätigungsstatus insbesondere einen Wert aus mindestens einer Teilmenge der folgenden annimmt: "unbekannt", "verifiziert", "Nichtübereinstimmung im selben Land", "Nichtübereinstimmung in einem anderen Land", "Roaming-Land-Nichtübereinstimmung", "Fehler nicht autorisiert", "Fehler sonstige",
- eine Zeitstempelinformation der Standortbestätigungsprüfung,
- eine Anwendungskennung,
- eine Information darüber, ob das Benutzergerät (20) mit einer bestimmten Funkzelle verbunden ist, insbesondere ob das Benutzergerät (20) mit der bereitgestellten Funkzelle verbunden ist oder ob es nicht mit dieser Funkzelle verbunden ist.

4. Verfahren nach einem der vorhergehenden Ansprüche, wobei der zweite Schritt die Verwendung mindestens eines Teils der folgenden Informationselemente zwischen der Standortbestätigungsdatenverbraucherentität (401) und dem Standortverwaltungsserver (302) beinhaltet:
- als Teil der Standortbestätigungsdienstnutzungsbenachrichtigung:
- eine Kennung des anfragenden vertikalen Anwendungsebenenservers (401) und/oder vertikalen Anwendungsebenen-Benutzers,
- eine Kennung des Benutzergeräts (20), dessen Standort- oder Positionsinformation bestätigt wurde, und
- eine Zeitstempelinformation der Standortbestätigungsdienstbenachrichtigung.

5. Verfahren nach einem der vorhergehenden Ansprüche, wobei in einem dritten Schritt, der dem ersten Schritt vorausgeht, der vertikale Anwendungsebenenserver (401) an den Standortverwaltungsserver (302) eine Standortbestätigungsdienstabonnementanfrage übermittelt, um mit Standortbestätigungsdienstdaten bezüglich einer bestimmten Anwendung versorgt zu werden, wobei der Netzwerk-Standortverwaltungsserver (302) an den vertikalen Anwendungsebenenserver (401) eine Standortbestätigungsdienstabonnementantwort übermittelt.

6. Verfahren nach einem der vorhergehenden Ansprüche, wobei nachfolgend auf den ersten Schritt und vor dem zweiten Schritt der Standortverwaltungsserver (302) eine Benutzergerät-Standortverifizierung oder Standortprüfung unter Verwendung des Telekommunikationsnetzwerks (100), insbesondere einer Netzwerkfreigabefunktion des Telekommunikationsnetzwerks (100), durchführt.

7. Verfahren nach einem der vorhergehenden Ansprüche, wobei der dritte Schritt die Verwendung mindestens eines Teils der folgenden Informationselemente zwischen dem vertikalen Anwendungsebenenserver (401) und dem Standortverwaltungsserver (302) beinhaltet:
- als Teil der Standortbestätigungsdienstabonnementanfrage:
- eine Kennung des anfragenden vertikalen Anwendungsebenenservers (401) und/oder vertikalen Anwendungsebenen-Benutzers,
- eine Anwendungskennung bezüglich der Anwendung, für die das Abonnement angefordert wird, und/oder bezüglich der Identität des vertikalen Anwendungsebenendienstes, für den der Standortbestätigungsdienst abonniert wird,
- als Teil der Standortbestätigungsdienstabonnementantwort:
- eine Kennung des anfragenden vertikalen Anwendungsebenenservers (401) und/oder vertikalen Anwendungsebenen-Benutzers,
- eine Information bezüglich des Standortbestätigungsdienst-Abonnementstatus, insbesondere das Ergebnis der Standortbestätigungsdienstabonnementanfrage.

8. Benutzergerät (20) zur Verwendung einer Dienstermöglichungsarchitekturebene für Vertikale, SEAL, in einer vertikalen Anwendungsebenen-Implementierung, VAL-Implementierung, um mit Kommunikationsdiensten versorgt zu werden, unter Verwendung eines vertikalen Anwendungsebenenservers (401) über ein Telekommunikationsnetzwerk (100), insbesondere zur Unterstützung und Bereitstellung einer Standortprüffunktionalität und/oder zur Verifizierung standortbezogener Daten, die auf den tatsächlichen Standort oder die Position des Benutzergeräts (20) hinweisen, wobei das Benutzergerät (20) ein vertikales Anwendungsebenen-Benutzergerät (20) ist, das einen vertikalen Anwendungsebenenclient, VAL-Client, (21) und einen Standortverwaltungsclient (22) umfasst, wobei das Benutzergerät (20) so konfiguriert ist, dass es mit einer Dienstermöglichungsarchitekturebene für Vertikale kommuniziert, die einen Standortverwaltungsserver (302) umfasst und die in der Lage ist, eine Standortprüffunktionalität zu realisieren und/oder standortbezogene Daten zu verifizieren, die auf den tatsächlichen Standort oder die Position des Benutzergeräts (20) hinweisen, wobei, um unterstützt zu werden und/oder um mit einer Standortprüffunktionalität durch Bestätigung von Standortdaten und/oder Verifizierung standortbezogener Daten, die auf den tatsächlichen Standort oder die Position des Benutzergeräts (20) hinweisen, versorgt zu werden, das Benutzergerät (20) so konfiguriert ist, dass:
- der Standortverwaltungsclient (22) eine Standortbestätigungsanfrage an den Standortverwaltungsserver (302) übermittelt, damit der Standortverwaltungsserver (302) eine Standortprüffunktionalität durchführt und/oder standortbezogene Daten verifiziert, die auf den tatsächlichen Standort oder die Position des Benutzergeräts (20) hinweisen,
- der Standortverwaltungsclient (22) vom Standortverwaltungsserver (302) eine Standortbestätigungsantwort empfängt, wobei die Standortbestätigungsantwort eine Standortbestätigungsstatusinformation umfasst, wobei insbesondere die Standortbestätigungsdatenverbraucherentität (401) ebenfalls vom Standortverwaltungsserver (302) eine Standortbestätigungsdienstnutzungsbenachrichtigung empfängt.

9. System oder Telekommunikationsnetzwerk (100), umfassend ein Benutzergerät (20) nach Anspruch 8 und einen Standortverwaltungsserver (302), zur Verwendung einer Dienstermöglichungsarchitekturebene für Vertikale, SEAL, in einer vertikalen Anwendungsebenen-Implementierung, VAL-Implementierung, **dadurch gekennzeichnet, dass**, um dem Benutzergerät (20) Kommunikationsdienste bereitzustellen, unter Verwendung eines vertikalen Anwendungsebenenservers (401) über ein Telekommunikationsnetzwerk (100), insbesondere zur Unterstützung und Bereitstellung einer Standortprüffunktionalität und/oder zur Verifizierung standortbezogener Daten, die auf den tatsächlichen Standort oder die Position des Benutzergeräts (20) hinweisen, wobei das Benutzergerät (20) ein vertikales Anwendungsebenen-Benutzergerät (20) ist, das einen vertikalen Anwendungsebenenclient, VAL-Client, (21) und einen Standortverwaltungsclient (22) umfasst, wobei die Dienstermöglichungsarchitekturebene für Vertikale den Standortverwaltungsserver (302) umfasst, der in der Lage ist, eine Standortprüffunktionalität zu realisieren und/oder standortbezogene Daten zu verifizieren, die auf den tatsächlichen Standort oder die Position des Benutzergeräts (20) hinweisen, und, um durch den Standortverwaltungsserver (302) eine Standortprüffunktionalität durch Bestätigung von Standortdaten und/oder Verifizierung standortbezogener Daten, die auf den tatsächlichen Standort oder die Position des Benutzergeräts (20) hinweisen, gegenüber einer Standortbestätigungsdatenverbraucherentität (401) zu unterstützen und bereitzustellen, das System oder Telekommunikationsnetzwerk (100) so konfiguriert ist, dass:
- der Standortverwaltungsclient (22) eine Standortbestätigungsanfrage an den Standortverwaltungsserver (302) übermittelt, damit der Standortverwaltungsserver (302) eine Standortprüffunktionalität durchführt und/oder standortbezogene Daten verifiziert, die auf den tatsächlichen Standort oder die Position des Benutzergeräts (20) hinweisen,
- der Standortverwaltungsclient (22) vom Standortverwaltungsserver (302) eine Standortbestätigungsantwort empfängt, wobei die Standortbestätigungsantwort eine Standortbestätigungsstatusinformation umfasst, und die Standortbestätigungsdatenverbraucherentität (401) ebenfalls vom Standortverwaltungsserver (302) eine Standortbestätigungsdienstnutzungsbenachrichtigung empfängt.

10. Programm, umfassend einen computerlesbaren Programmcode, der, wenn er auf einem Computer und/oder auf einem Benutzergerät (20) und/oder auf einem Netzwerkknoten eines Telekommunikationsnetzwerks (100) und/oder auf einem Standortverwaltungsserver (302) und/oder auf einem vertikalen Anwendungsebenenserver (401) und/oder teilweise auf einem Netzwerkknoten eines Telekommunikationsnetzwerks (100) und/oder teilweise auf einem Standortverwaltungsserver (302) und/oder teilweise auf einem vertikalen Anwendungsebenenserver (401) ausgeführt wird, den Computer und/oder das Benutzergerät (20) und/oder den Netzwerkknoten eines Telekommunikationsnetzwerks (100) und/oder den Standortverwaltungsserver (302) und/oder den vertikalen Anwendungsebenenserver (401) veranlasst, ein Verfahren nach einem der Ansprüche 1 bis 7 auszuführen.

11. Computerlesbares Medium, umfassend Anweisungen, die, wenn sie auf einem Computer und/oder auf einem Benutzergerät (20) und/oder auf einem Netzwerkknoten eines Telekommunikationsnetzwerks (100) und/oder auf einem Standortverwaltungsserver (302) und/oder auf einem vertikalen Anwendungsebenenserver (401) und/oder teilweise auf einem Netzwerkknoten eines Telekommunikationsnetzwerks (100) und/oder teilweise auf einem Standortverwaltungsserver (302) und/oder teilweise auf einem vertikalen Anwendungsebenenserver (401) ausgeführt werden, den Computer und/oder das Benutzergerät (20) und/oder den Netzwerkknoten eines Telekommunikationsnetzwerks (100) und/oder den Standortverwaltungsserver (302) und/oder den vertikalen Anwendungsebenenserver (401) veranlassen, ein Verfahren nach einem der Ansprüche 1 bis 7 auszuführen.

## Revendications

1. Procédé d'utilisation d'une couche d'architecture d'activation de services pour verticaux, SEAL, dans une mise en œuvre de couche d'application verticale, implémentation VAL, **caractérisé en ce que**, afin de fournir des services de communication à un équipement utilisateur (20), en utilisant un serveur de couche d'application verticale (401) via un réseau de télécommunications (100), en particulier pour supporter et fournir une fonctionnalité de vérification de localisation et/ou vérifier des données liées à la localisation indiquant la localisation ou la position réelle de l'équipement utilisateur (20), l'équipement utilisateur (20) étant un équipement utilisateur de couche d'application verticale (20) comprenant un client de couche d'application verticale, client VAL, (21) et un client de gestion de localisation (22), la couche d'architecture d'activation de services pour verticaux comprenant un serveur de gestion de localisation (302) qui est capable de réaliser une fonctionnalité de vérification de localisation et/ou de vérifier des données liées à la localisation indiquant la localisation ou la position réelle de l'équipement utilisateur (20), et, afin de supporter et de fournir, par le serveur de gestion de localisation (302), une fonctionnalité de vérification de localisation au moyen de la confirmation de données de localisation et/ou de la vérification de données liées à la localisation indiquant la localisation ou la position réelle de l'équipement utilisateur (20) vers une entité consommatrice de données de confirmation de localisation (401), le procédé comprend les étapes suivantes:
- dans une première étape, le client de gestion de localisation (22) transmet une demande de confirmation de localisation au serveur de gestion de localisation (302) afin que le serveur de gestion de localisation (302) effectue une fonctionnalité de vérification de localisation et/ou vérifie des données liées à la localisation indiquant la localisation ou la position réelle de l'équipement utilisateur (20),
- dans une deuxième étape, le client de gestion de localisation (22) reçoit, du serveur de gestion de localisation (302), une réponse de confirmation de localisation, la réponse de confirmation de localisation comprenant une information d'état de confirmation de localisation, et l'entité consommatrice de données de confirmation de localisation (401) reçoit, également du serveur de gestion de localisation (302), une notification d'utilisation du service de confirmation de localisation.

2. Procédé selon la revendication 1, dans lequel la deuxième étape implique d'utiliser, comme entité consommatrice de données de confirmation de localisation (401), le serveur de couche d'application verticale (401).

3. Procédé selon l'une des revendications précédentes, dans lequel les première et deuxième étapes impliquent d'utiliser au moins une partie des éléments d'information suivants entre le client de gestion de localisation (22) et le serveur de gestion de localisation (302) :
- dans le cadre de la demande de confirmation de localisation :
- un identifiant de l'équipement utilisateur (20) dont les informations de localisation ou de position doivent être confirmées,
- la localisation ou la position fournie par l'équipement utilisateur à partir d'une fonctionnalité au sein de l'équipement utilisateur (20), impliquant notamment l'utilisation d'un système de navigation par satellite global, ce qui inclut notamment au moins l'un des éléments suivants : une précision verticale, une information d'horodatage, une information de cap/direction, une information de longitude, une information de vitesse, une information de latitude, une information de précision horizontale, une information d'altitude,
- une information d'horodatage des informations de localisation ou de position fournies par l'équipement utilisateur,
- une information d'identifiant d'application,
- une information concernant l'identité de cellule radio, CelllD, identifiée dans l'équipement utilisateur (20) à partir de la signalisation de l'équipement utilisateur,
- une information d'identifiant concernant l'équipement mobile, en particulier l'information d'identifiant international d'équipement mobile, IMEI,
- dans le cadre de la réponse de confirmation de localisation :
- un identifiant de l'équipement utilisateur (20) dont les informations de localisation ou de position doivent être confirmées,
- une information concernant l'état de confirmation de localisation, en particulier le résultat de la fonctionnalité de vérification de localisation, l'état de confirmation de localisation prenant notamment une valeur parmi au moins un sous-ensemble des suivantes : « inconnu », « vérifié », « non-concordance dans le même pays », « non-concordance dans un autre pays », « non-concordance de pays d'itinérance », « erreur non autorisé », « autre erreur »,
- une information d'horodatage de la vérification de confirmation de localisation,
- un identifiant d'application,
- une information indiquant si l'équipement utilisateur (20) est connecté à une cellule radio spécifique, en particulier si l'équipement utilisateur (20) est connecté à la cellule radio fournie ou s'il n'est pas connecté à cette cellule radio.

4. Procédé selon l'une des revendications précédentes, dans lequel la deuxième étape implique d'utiliser au moins une partie des éléments d'information suivants entre l'entité consommatrice de données de confirmation de localisation (401) et le serveur de gestion de localisation (302) :
- dans le cadre de la notification d'utilisation du service de confirmation de localisation :
- un identifiant du serveur de couche d'application verticale (401) demandeur et/ou de l'utilisateur de couche d'application verticale,
- un identifiant de l'équipement utilisateur (20) dont les informations de localisation ou de position ont été confirmées, et
- une information d'horodatage de la notification de service de confirmation de localisation.

5. Procédé selon l'une des revendications précédentes, dans lequel, dans une troisième étape précédant la première étape, le serveur de couche d'application verticale (401) transmet, au serveur de gestion de localisation (302), une demande d'abonnement au service de confirmation de localisation afin d'être fourni avec des données de service de confirmation de localisation relatives à une application spécifique, le serveur de gestion de localisation (302) de réseau transmettant, au serveur de couche d'application verticale (401), une réponse d'abonnement au service de confirmation de localisation.

6. Procédé selon l'une des revendications précédentes, dans lequel, après la première étape et avant la deuxième étape, le serveur de gestion de localisation (302) effectue une vérification de localisation ou un contrôle de localisation de l'équipement utilisateur en utilisant le réseau de télécommunications (100), en particulier une fonction d'exposition du réseau du réseau de télécommunications (100).

7. Procédé selon l'une des revendications précédentes, dans lequel la troisième étape implique d'utiliser au moins une partie des éléments d'information suivants entre le serveur de couche d'application verticale (401) et le serveur de gestion de localisation (302) :
- dans le cadre de la demande d'abonnement au service de confirmation de localisation :
- un identifiant du serveur de couche d'application verticale (401) demandeur et/ou de l'utilisateur de couche d'application verticale,
- une information d'identifiant d'application concernant l'application pour laquelle l'abonnement est demandé et/ou concernant l'identité du service de couche d'application verticale pour lequel le service de confirmation de localisation est souscrit,
- dans le cadre de la réponse d'abonnement au service de confirmation de localisation :
- un identifiant du serveur de couche d'application verticale (401) demandeur et/ou de l'utilisateur de couche d'application verticale,
- une information concernant l'état d'abonnement au service de confirmation de localisation, en particulier le résultat de la demande d'abonnement au service de confirmation de localisation.

8. Équipement utilisateur (20) pour utiliser une couche d'architecture d'activation de services pour verticaux, SEAL, dans une mise en œuvre de couche d'application verticale, implémentation VAL, pour être fourni avec des services de communication, en utilisant un serveur de couche d'application verticale (401) via un réseau de télécommunications (100), en particulier pour supporter et fournir une fonctionnalité de vérification de localisation et/ou vérifier des données liées à la localisation indiquant la localisation ou la position réelle de l'équipement utilisateur (20), l'équipement utilisateur (20) étant un équipement utilisateur de couche d'application verticale (20) comprenant un client de couche d'application verticale, client VAL, (21) et un client de gestion de localisation (22), l'équipement utilisateur (20) étant configuré pour communiquer avec une couche d'architecture d'activation de services pour verticaux qui comprend un serveur de gestion de localisation (302) et qui est capable de réaliser une fonctionnalité de vérification de localisation et/ou de vérifier des données liées à la localisation indiquant la localisation ou la position réelle de l'équipement utilisateur (20), afin d'être supporté et/ou d'être fourni avec une fonctionnalité de vérification de localisation au moyen de la confirmation de données de localisation et/ou de la vérification de données liées à la localisation indiquant la localisation ou la position réelle de l'équipement utilisateur (20), l'équipement utilisateur (20) étant configuré de telle sorte que :
- le client de gestion de localisation (22) transmet une demande de confirmation de localisation au serveur de gestion de localisation (302) afin que le serveur de gestion de localisation (302) effectue une fonctionnalité de vérification de localisation et/ou vérifie des données liées à la localisation indiquant la localisation ou la position réelle de l'équipement utilisateur (20),
- le client de gestion de localisation (22) reçoit, du serveur de gestion de localisation (302), une réponse de confirmation de localisation, la réponse de confirmation de localisation comprenant une information d'état de confirmation de localisation, l'entité consommatrice de données de confirmation de localisation (401) recevant notamment, également du serveur de gestion de localisation (302), une notification d'utilisation du service de confirmation de localisation.

9. Système ou réseau de télécommunications (100), comprenant un équipement utilisateur (20) selon la revendication 8 et un serveur de gestion de localisation (302), pour utiliser une couche d'architecture d'activation de services pour verticaux, SEAL, dans une mise en œuvre de couche d'application verticale, implémentation VAL, **caractérisé en ce que**, afin de fournir des services de communication à l'équipement utilisateur (20), en utilisant un serveur de couche d'application verticale (401) via un réseau de télécommunications (100), en particulier pour supporter et fournir une fonctionnalité de vérification de localisation et/ou vérifier des données liées à la localisation indiquant la localisation ou la position réelle de l'équipement utilisateur (20), l'équipement utilisateur (20) étant un équipement utilisateur de couche d'application verticale (20) comprenant un client de couche d'application verticale, client VAL, (21) et un client de gestion de localisation (22), la couche d'architecture d'activation de services pour verticaux comprenant le serveur de gestion de localisation (302) qui est capable de réaliser une fonctionnalité de vérification de localisation et/ou de vérifier des données liées à la localisation indiquant la localisation ou la position réelle de l'équipement utilisateur (20), et, afin de supporter et de fournir, par le serveur de gestion de localisation (302), une fonctionnalité de vérification de localisation au moyen de la confirmation de données de localisation et/ou de la vérification de données liées à la localisation indiquant la localisation ou la position réelle de l'équipement utilisateur (20) vers une entité consommatrice de données de confirmation de localisation (401), le système ou réseau de télécommunications (100) est configuré de telle sorte que :
- le client de gestion de localisation (22) transmet une demande de confirmation de localisation au serveur de gestion de localisation (302) afin que le serveur de gestion de localisation (302) effectue une fonctionnalité de vérification de localisation et/ou vérifie des données liées à la localisation indiquant la localisation ou la position réelle de l'équipement utilisateur (20),
- le client de gestion de localisation (22) reçoit, du serveur de gestion de localisation (302), une réponse de confirmation de localisation, la réponse de confirmation de localisation comprenant une information d'état de confirmation de localisation, et l'entité consommatrice de données de confirmation de localisation (401) reçoit, également du serveur de gestion de localisation (302), une notification d'utilisation du service de confirmation de localisation.

10. Programme comprenant un code de programme lisible par ordinateur qui, lorsqu'il est exécuté sur un ordinateur et/ou sur un équipement utilisateur (20) et/ou sur un nœud de réseau d'un réseau de télécommunications (100) et/ou sur un serveur de gestion de localisation (302) et/ou sur un serveur de couche d'application verticale (401) et/ou en partie sur un nœud de réseau d'un réseau de télécommunications (100) et/ou en partie sur un serveur de gestion de localisation (302) et/ou en partie sur un serveur de couche d'application verticale (401), amène l'ordinateur et/ou l'équipement utilisateur (20) et/ou le nœud de réseau d'un réseau de télécommunications (100) et/ou le serveur de gestion de localisation (302) et/ou le serveur de couche d'application verticale (401) à exécuter un procédé selon l'une des revendications 1 à 7.

11. Support lisible par ordinateur comprenant des instructions qui, lorsqu'elles sont exécutées sur un ordinateur et/ou sur un équipement utilisateur (20) et/ou sur un nœud de réseau d'un réseau de télécommunications (100) et/ou sur un serveur de gestion de localisation (302) et/ou sur un serveur de couche d'application verticale (401) et/ou en partie sur un nœud de réseau d'un réseau de télécommunications (100) et/ou en partie sur un serveur de gestion de localisation (302) et/ou en partie sur un serveur de couche d'application verticale (401), amènent l'ordinateur et/ou l'équipement utilisateur (20) et/ou le nœud de réseau d'un réseau de télécommunications (100) et/ou le serveur de gestion de localisation (302) et/ou le serveur de couche d'application verticale (401) à exécuter un procédé selon l'une des revendications 1 à 7.
